# EUROPÄISCHE PATENTANMELDUNG

(11) **EP 3 674 111 A1**
(43) Veröffentlichungstag der Anmeldung: **01.07.2020**
(21) Anmeldenummer: 19212946.8
(22) Anmeldetag: 02.12.2019
(51) Int. Cl.: B60D 5/00, B61D 17/22, B62D 47/02, B64F 1/305, B64F 1/31

(54) **VERBINDUNGSANORDNUNG ZUR VERBINDUNG VON FALTEN- ODER WELLENFLÄCHENKÖRPERN EINES BALGES**

(30) Priorität: 28.12.2018 CN 201811652564
(71) Anmelder: Hübner GmbH & Co. KG, 34123 Kassel (DE)
(72) Erfinder: HEINRICH, Marc, Shanghai, Shanghai 200042 (CN)
(74) Vertreter: Patentanwälte Walther Hinz Bayer PartGmbB

(57) **Zusammenfassung**

Gegenstand der Erfindung ist eine Verbindungsanordnung (100) zur Verbindung von Falten- oder Wellenflächenkörpern (11) eines Balges (1) einer Übergangseinrichtung zwischen zwei beweglich miteinander verbundenen Fahrzeugen oder einer Fluggastbrücke oder einer Fluggasttreppe, wobei die Verbindungsanordnung ein streifenförmiges, flexibles Verbindungsband (2) umfasst, wobei die Falten- oder Wellenflächenkörper (11) randseitig mit dem Verbindungsband (2) verbunden sind.

## Beschreibung

Die vorliegende Erfindung betrifft eine Verbindungsanordnung zur Verbindung von Falten- oder Wellenflächenkörpern eines Balges einer Übergangseinrichtung zwischen zwei beweglich miteinander verbundenen Fahrzeugen oder einer Fluggastbrücke oder einer Fluggasttreppe.

### STAND DER TECHNIK

Bälge für Übergangseinrichtungen zwischen den Gliedern von Gelenkfahrzeugen sowie für Fluggastbrücken oder -treppen sind aus dem Stand der Technik hinreichend bekannt. In Bezug auf die Ausgestaltung des Balges sind im Wesentlichen zwei unterschiedliche Arten bekannt, nämlich zum einen Falten- und zum anderen Wellenbälge. Beiden Balgarten ist gemein, dass diese mehrere hintereinander angeordnete, umlaufende oder U-förmig verlaufende Balgrahmen zur Verbindung und Stabilisierung der Flächenkörper aufweisen. Bei einem Wellenbalg werden beispielsweise die Wellenflächenkörper im Wellengrund durch den Balgrahmen erfasst, wohingegen bei einem Faltenbalg eine Mehrzahl von Balgrahmen die Faltenflächenkörper im Übergang von einer Falte zur nächsten Falte erfassend zumindest auf der Außenseite des Balges vorgesehen sind. Die Balgrahmen sind üblicherweise aus Metall, insbesondere Aluminium, gefertigt, die Flächenkörper bestehen üblicherweise aus einem beschichteten Textil. Zur Verbindung von Balgrahmen und Flächenkörpern nach dem Stand der Technik weisen die Balgrahmen typischerweise einen etwa U-förmigen Querschnitt unter Bildung einer Kavität auf, wobei die Flächenkörper randseitig durch die Kavität aufgenommen und darin mit dem Balgrahmen verklemmt, verklebt und/oder vernietet sind.

Nachteilig an solchen Verbindungsanordnungen nach dem Stand der Technik sind die hohen Kosten für Material, Fertigung und Montage, die durch die Verwendung der metallischen Balgrahmen anfallen. Hinsichtlich des Gewichtes des Balges ist des Weiteren das hohe spezifische Gewicht der Balgrahmen im Vergleich zu dem der textilen Flächenkörper von Nachteil.

### OFENBARUNG DER ERFINDUNG

Es ist daher die Aufgabe der vorliegenden Erfindung, eine Weiterbildung einer Verbindungsanordnung zur Verbindung von Falten- oder Wellenflächenkörpern eines Balges vorzuschlagen, welche die vorgenannten Nachteile überwindet und insbesondere eine kostengünstige und leichtgewichtige Alternative zu Anordnungen nach dem Stand der Technik bietet.

Diese Aufgabe wird ausgehend von einer Verbindungsanordnung gemäß dem Oberbegriff des Anspruchs 1 in Verbindung mit den kennzeichnenden Merkmalen gelöst. Vorteilhafte Weiterbildung der Erfindung sind in den abhängigen Ansprüchen angegeben.

Die Erfindung schließt die technische Lehre ein, dass die Verbindungsanordnung ein streifenförmiges, flexibles Verbindungsband umfasst, wobei die Falten- oder Wellenflächenkörper randseitig mit dem Verbindungsband verbunden sind.

Der Kerngedanke der Erfindung besteht darin, den aus dem Stand der Technik bekannten Balgrahmen durch ein Verbindungsband zu ersetzen, welches aus einem kostengünstigeren und leichteren Material besteht und eine weniger aufwändig herzustellende Verbindung mit den Flächenkörpern ermöglicht.

Dabei sind die Flächenkörper in vorteilhafter Ausführungsform randseitig mit dem Verbindungsband mittels Nähten vernäht. Das Vernähen der textilen Flächenkörper mit dem erfindungsgemäßen, flexiblen Verbindungsband ist dabei ein wesentlich weniger aufwändiger und weniger kostenintensiver Vorgang als das aus dem Stand der Technik bekannte Verklemmen, Verkleben und Vernieten der Flächenkörper mit einem starren, metallischen Balgrahmen.

Vorzugsweise ist das Verbindungsband aus einem nichtmetallischen, biegsamen Werkstoff ausgebildet, insbesondere aus einem beschichteten Textil. Ein derartiges Textil kann als ein Gewebe, ein Gelege, ein Gestrick oder ein Vlies ausgebildet sein, und beispielsweise Fasern aus Aramid oder Polyester oder Polyamid oder Polyurethan umfassen, sowie mit einer Beschichtung aus beispielsweise Silikonkautschuk oder chlorsulfoniertem Polyethylen oder Polyvinylchlorid beschichtet sein. Ein solches Verbindungsband aus Textil ist insbesondere zum Vernähen mit den textilen Flächenkörpern geeignet. Aufgrund des biegsamen Werkstoffs kann das Verbindungsband der gewünschten Außenkontur des Balges angepasst werden. Ein Biegen und Anpassen metallischer Balgrahmen kann entfallen.

Vorzugsweise weist das Verbindungsband eine höhere Dicke, einen höheren Elastizitätsmodul und/oder eine höhere Biegefestigkeit auf als die Falten- oder Wellenflächenkörper, die bevorzugt aus einem beschichteten Textil gebildet sind. Dadurch kann das Verbindungsband eine Stützwirkung entfalten und die durch den Verzicht auf einen Balgrahmen herabgesetzte mechanischen Stabilität des Balges oder Balgabschnittes verbessern. Die höhere Dicke kann durch einen veränderten Aufbau des beschichteten Textils erreicht werden, indem zum Beispiel die Schichtdicke erhöht wird oder mehrere Textillagen eingesetzt werden. Die Veränderung des Elastizitätsmoduls des Verbindungsbands und/oder des Falten- oder Wellenflächenkörpers kann durch Veränderung der Dicke des beschichteten Textil, durch Veränderung des Beschichtungsmaterials und/oder des Textil erreicht werden. Durch die Variation der Schichtdicke, des Elastizitätsmoduls und/oder der Biegesteifigkeit des Verbindungsbands in Kombination mit der Variation der Schichtdicke, des Elastizitätsmoduls und/oder der Biegesteifigkeit des Falten- oder Wellenflächenkörpers ist eine Formvariation und Formanpassung der Verbindungseinrichtung und/oder des Balgschnitts möglich.

In weiterer vorteilhafter Ausführungsform umfasst die Verbindungsanordnung zwei Einfassbänder, wobei die Einfassbänder jeweils randseitig um einen Flächenkörper und das Verbindungsband umgeschlagen und mit dem Flächenkörper und dem Verbindungsband mittels einer Naht vernäht sind. Solch klammerartiges Einfassen durch Einfassbänder, welche insbesondere aus einem verschleißfesten Textil gefertigt sein können, sorgt für eine schützende Ummantelung der miteinander vernähten Endabschnitte von Flächenkörper und Verbindungsband.

Vorzugsweise umfasst die Verbindungsanordnung weiterhin zwei Reibungsschutzbänder, welche jeweils randseitig um einen Flächenkörper und das Verbindungsband bzw. um die Einfassbänder umgeschlagen und mit diesen vernäht sind. Die Reibungsschutzbänder bestehen vorteilhaft aus einem verschleißfesten Textil mit einer reibungsarmen Oberfläche, beispielsweise aus Polyamid Fasern (Nylon). Beim Betrieb des Balges, insbesondere bei der Kurvenfahrt eines Gelenkfahrzeugs, können benachbarte Verbindungsanordnungen miteinander in Kontakt geraten und aneinander reiben. Zweck der Verwendung von Reibungsschutzbändern ist es, in solchen Kontaktsituationen einen möglichst niedrigen Reibungskoeffizienten zu gewährleisten und den gegenseitigen abrasiven Verschleiß zu minimieren. Bei entsprechender Ausgestaltung des Einfassbandes kann das Einfassband die Funktion des Reibungsschutzbandes übernehmen, sodass auf zusätzliche Reibungsschutzbänder verzichtet werden kann.

Gegenstand der Erfindung ist des Weiteren ein Balg einer Übergangseinrichtung zwischen zwei beweglich miteinander verbundenen Fahrzeugen oder einer Fluggastbrücke oder einer Fluggasttreppe, welcher eine Mehrzahl von miteinander verbundenen Falten- oder Wellenflächenkörper umfasst, wobei die Verbindung der Flächenkörper vorteilhaft wenigstens abschnittsweise mittels der erfindungsgemäßen Verbindungsanordnung ausgebildet. Ein derartiger teilweiser Ersatz der konventionellen Balgrahmen kann einen geeigneten Kompromiss aus kostengünstiger Leichtbauweise und notwendiger mechanischer Stabilität des Balges darstellen. Beispielsweise können in Längsrichtung des Balges alternierend Balgrahmen und erfindungsgemäße Verbindungsanordnungen angeordnet sein oder die Balgrahmen weisen eine etwa U-förmige Gestalt auf und der verbleibenden Dachabschnitt des Balges ist mit erfindungsgemäßen Verbindungsanordnungen versehen.

Ein weiterer Erfindungsgegenstand ist zudem ein Reparaturset für einen wenigstens abschnittsweise beschädigten oder abgenutzten Balg, wobei das Reparaturset einen Balgmantel aus einer Mehrzahl von miteinander verbundenen Falten- oder Wellenflächenkörpern umfasst und die Verbindung der Flächenkörper mittels der erfindungsgemäßen Verbindungsanordnung ausgebildet ist. Ein solcher Balgmantel wird als Reparaturmaßnahme in umhüllende Anordnung um den beschädigten oder abgenutzten Abschnitt des Balges gebracht und mit diesem verbunden. Zum Vergleich offenbart die EP 2 853 421 B1 ein Reparaturset für einen verschlissenen Dachbereich eines Balges nach dem Stand der Technik. Dieses umfasst einen Balgdachabschnitt mit einer Mehrzahl von U-förmig umlaufenden Balgdachrahmen und der verschlissene Dachbereich des Balges muss vollständig entfernt und durch den neuen Balgdachabschnitt ersetzt werden. Die dabei anfallenden Arbeitsschritte des Entfernens des verschlissenen Dachabschnitts sowie des Ausrichtens und Verbindens des neuen Balgdachabschnitts sind mit großem Aufwand verbunden, insbesondere weil die steifen Balgdachrahmen des neue Balgdachabschnittes typischerweise Formabweichungen und Toleranzen in Bezug auf die Balgrahmen des zu reparierenden Balges aufweisen, und weil die Herstellung einer belastbaren Verbindung der verbliebenen Balgrahmen mit den Balgdachrahmen kompliziert ist. Im Vergleich dazu beschränken sich die vorzunehmenden Arbeitsschritte bei der Verwendung eines erfindungsgemäßen Reparatursets auf das Anordnen des Balgmantels über den verschlissenen Balgabschnitt und anschließendes Verbinden. Die Anordnung erfolgt dabei derart, dass die Verbindungsbänder des Balgmantels die Balgrahmen des verschlissenen Balges überdecken und die jeweiligen Flächenkörper übereinander liegen. Der Balgmantel des erfindungsgemäßen Reparatursets wird mit dem Balg vorzugsweise mittels Nähten vernäht und/oder mit dem Balg verklebt und/oder mit dem Balg mittels einer Niet- oder Schraubverbindung verbunden. Vorteilhaft werden im Bereich der Balgrahmen des Balges Niet- oder Schraubverbindung mit dem Balgmantel hergestellt, insbesondere wird das Verbindungsband mittels Nieten mit dem Balgrahmen verbunden. Zusätzlich kann ein U-förmiges Klemmprofil zur Verbindung des Balgmantels mit dem Balg dienen. Das Klemmprofil überdeckt das Verbindungsband sowie randseitig die Falten- oder Wellenflächenkörper des Balgmantels sowie den darunter liegenden Balgrahmen. Das Klemmprofil kann klemmend oder mittels eines Verbindungsmittels an dem Balgrahmen befestigt sein. Zum Beispiel kann ein Niet durch die Schenkel des Klemmprofils und den dazwischen liegenden Balgrahmen getrieben sein. Die Verbindung mittels des zusätzlichen Klemmprofils kann insbesondere bei sehr schmalen Balgrahmen zum Einsatz kommen, wenn das Einbringen eines Verbindungsmittels in die Stirnfläche des Balgrahmens problematisch ist.

### BEVORZUGTE AUSFÜHRUNGSBEISPIELE DER ERFINDUNG

Weitere, die Erfindung verbessernde Maßnahmen werden nachstehend gemeinsam mit der Beschreibung von bevorzugten Ausführungs- und Anwendungsbeispielen der erfindungsgemäßen Verbindungsvorrichtung anhand der Figuren näher dargestellt. Es zeigen:
- Fig. 1:: eine Querschnittsansicht einer erfindungsgemäßen Verbindungsanordnung,
- Fig. 2:: eine Teilansicht eines erfindungsgemäßen Wellenbalges,
- Fig. 3:: eine Teilansicht eines erfindungsgemäßen Reparatursets in Anordnung an einem verschlissenen Wellenbalg,
- Fig. 4:: eine Teilansicht eines weiteren erfindungsgemäßen Reparatursets in Anordnung an einem verschlissenen Wellenbalg,
- Fig. 5: eine Querschnittsansicht gemäß der Linie V-V aus Fig. 3, und
- Fig. 6: eine Querschnittsansicht gemäß der Linie VI-VI aus Fig. 4.

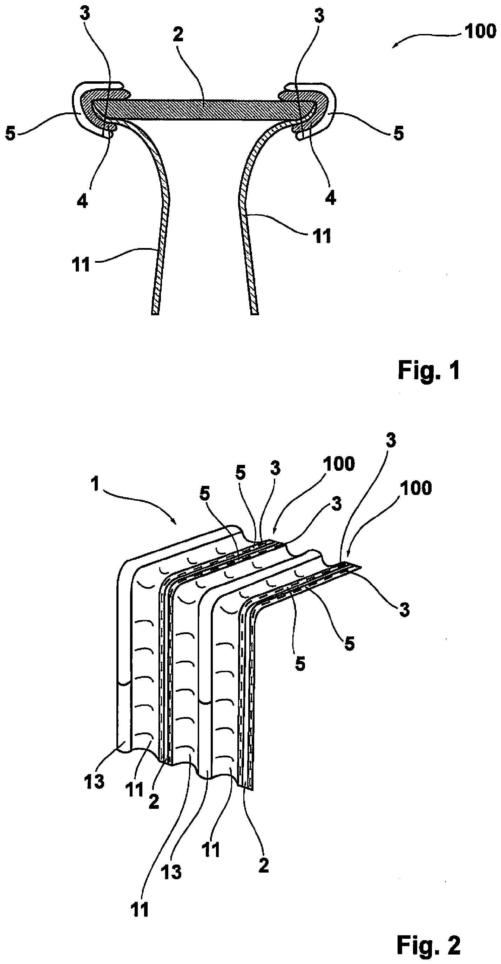

Fig. 1 zeigt eine Querschnittsansicht einer vorteilhaften Ausführungsform der erfindungsgemäßen Verbindungsanordnung 100. Die Endabschnitte der beiden zu verbindenden Flächenkörper 11 sind randseitig jeweils mit einem Endabschnitt des Verbindungsbandes 2 in Kontakt und diese Anordnungen sind klammerartig umfasst von jeweils einem Einfassband 4 und jeweils einem außenliegenden Reibungsschutzband 5. Diese Anordnungen sind mittels der durchgehenden Nähte 3 dauerhaft und belastbar fixiert. Das Verbindungsband 2 ist aus einem beschichteten, hochfesten Textil gefertigt und weist eine dickere Materialstärke und Biegesteifigkeit als die Flächenkörper 11 auf, um der Verbindungsanordnung 100 ausreichende Steifigkeit und Stabilität zu verleihen und in dieser Hinsicht den Wegfall des aus dem Stand der Technik bekannten metallischen Balgrahmens wenigstens teilweise zu kompensieren. Dank der Umhüllung durch die Einfassbänder 4 werden die Endabschnitte der miteinander verbundenen Flächenkörper 11 und des Verbindungsbandes 2 bei Verformung und Beanspruchung im Praxiseinsatz eines entsprechenden Balges davor geschützt voneinander weggebogen zu werden, wodurch die Nähte 3 andernfalls stark belastet und potentiell beschädigt würden. Die beiden Reibungsschutzbänder 5 sind vollständig um die miteinander verbundenen Endabschnitte der Flächenkörper 11 und des Verbindungsbandes 2 herumgeführt, um bei jeder im Praxiseinsatz anzutreffenden Kontaktsituation mit einer benachbarten Verbindungsanordnung eine reibungsarme und verschleissfeste Oberfläche darzubieten. Um ein Aufscheuern der Nähte 3 zu vermeiden, sind die Nähte 3 mit einem entsprechenden Sicherheitsabstand zu den Rändern der Flächenkörper 11 und des Verbindungsbandes 2 angeordnet.

Fig. 2 zeigt eine Teilansicht eines erfindungsgemäßen Wellenbalges 1 mit in Längsrichtung des Balges 1 alternierender Anordnung von konventionellen Balgrahmen 13 und erfindungsgemäßen Verbindungsanordnungen 100 zur Verbindung der Wellenflächerikörper 11 mittels der Verbindungsbänder 2 und der Nähte 3. Dabei dienen die vorzugsweise aus Aluminiumprofilen gefertigten Balgrahmen 13 der Wahrung von ausreichender Stabilität und Robustheit des Balges, während durch die abschnittsweise Verwendung der textilen Verbindungsanordnungen 100 das Gewicht des Balges und die bei seiner Herstellung anfallenden Kosten reduziert werden. Die vorteilhaft an den Rändern der Verbindungsbänder 2 vorgehaltenen Reibungsschutzbänder 5 schützen die Verbindungsanordnungen 100 vor Verschleiß beim Reibkontakt mit den benachbarten Balgrahmen 13.

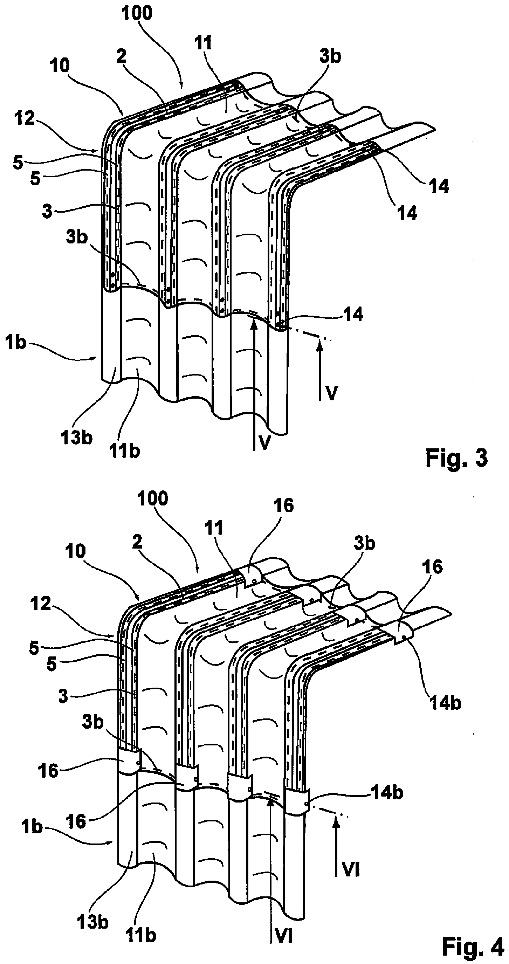

Fig. 3 und Fig. 4 zeigen Teilansichten eines erfindungsgemäßen Reparatursets 10 mit dem Balgmantel 12 in Anordnung an einem schadhaften Wellenbalg 1b mit teilweise verschlissenen Wellenflächenkörpern 11b. Der Balgmantel 12 umfasst die Wellenflächenkörper 11, die mittels der Verbindungsanordnungen 100 miteinander verbunden sind, wobei die Verbindungsanordnungen 100 die Verbindungsbänder 2, die Nähte 3 und die Reibungsschutzbänder 5 umfassen. Dabei sind die Verbindungsbänder 2 über den Balgrahmen 13b angeordnet und die Wellenflächenkörper 11 des Balgmantels 12 bedecken die verschlissenen Bereiche der Wellenflächenkörper 11b des beschädigten Balges 1b. Um eine dauerhaft feste Verbindung zwischen dem Balgmantel 12 und dem schadhaften Balg 1b zu gewährleisten, sind zum einen die Flächenkörper 11 des Balgmantels 12 stirnseitig mittels der Nähte 3b mit den darunterliegenden Flächenkörpern 11b vernäht. Zur verbesserten Abdichtung des Zwischenraumes zwischen den Flächenkörpern 11 und 11b, insbesondere gegen das Eindringen von Feuchtigkeit und Zugluft, kann im Bereich der Nähte 3b vorteilhaft noch eine zusätzliche Klebeverbindung und/oder ein elastisches Dichtmittel eingebracht sein.

Des Weiteren sind in Fig. 3 die Verbindungsbänder 2 mittels der Niete 14 mit den darunterliegenden Balgrahmen 13b vernietet. Alternativ ist in Fig. 4 die Verwendung von U-förmigen Klemmprofilen 16 dargestellt, welche von außen über die Balgrahmen 13b gestülpt werden und dabei die zwischenliegenden Abschnitte des Balgmantels 12 einklemmen und somit fixieren. Zusätzlich sind die Klemmprofile 16 noch mittels der Niete 14b an den Balgrahmen 13b befestigt, wobei die Niete 14b durch jeweils beide Schenkel der Klemmprofile 16 verlaufen.

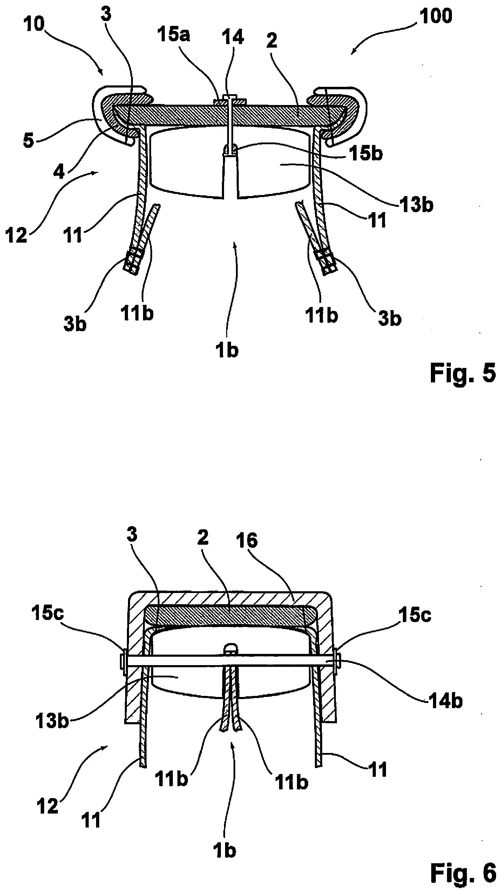

V und VI markieren die in Fig. 5 und Fig. 6 dargestellten Schnittebenen.

Im Vergleich zu den aufwendigen Reparaturverfahren aus dem Stand der Technik beschränken sich die Arbeitsschritte bei Verwendung eines erfindungsgemäßen Reparatursets 10 also auf das Anordnen des Balgmantels 12 und dessen Verbindung mit dem schadhaften Balg 1b. Da der Balgmantel 12 vollständig aus flexiblem und leichtem Textil gefertigt ist, sind diese Arbeitsschritte sehr einfach und in kurzer Zeit durchführbar. Der Arbeitsaufwand ist wesentlich geringer verglichen mit den Reparaturmaßnahmen, etwa für einen verschlissenen Dachabschnitt, nach dem Stand der Technik, bei welchen erfahrungsgemäß bis zu sechs Personen notwendig sind um das Entfernen des verschlissenen Balgsegmentes und das aufwändige Anordnen und Verbinden eines Reparatursets mit steifen Balgdachrahmen durchzuführen. Insbesondere kann sich der flexible Balgmantel 12 mit der erfindungsgemäßen flexiblen Verbindungseinrichtung 100 der Außenkontur des schadhaften Wellenbalges 1b anpassen.

Fig. 5 und Fig. 6 zeigen Querschnittsansichten (gemäß der Linien V-V in Fig. 3 bzw. VI-VI in Fig. 4) der in Fig. 3 und Fig. 4 dargestellten erfindungsgemäßen Reparatursets 10 in Anordnung an dem verschlissenen Balg 1b. Das Reparaturset 10 umfasst den Balgmantel 12, welcher aus den mittels der Verbindungsanordnung 100 verbundenen Wellenflächenkörpern 11 besteht, wobei die Verbindungsanordnung das Verbindungsband 2, die Einfassbänder 4, die Reibungsschutzbänder 5 und die Nähte 3 umfasst. Das Verbindungsband 2 liegt dabei an der Stirnseite des hufeisenförmigen Profils des Balgrahmens 13b an und die Flächenkörper 11 des Balgmantels 12 überdecken die verschlissenen Bereiche der Flächenkörper 11b des schadhaften Balges 1b.

Anhand der in Fig. 5 dargestellten Schnittebene kann insbesondere die Verbindung des Balgmantels 12 mit dem Balg 1b nachvollzogen werden. Diese Verbindung wird einerseits durch den Niet 14 realisiert, welcher das Verbindungsband 2 an der Stirnseite des Balgrahmens 13b fixiert. Dazu ist eine passend dimensionierte Bohrung durch das Einfassband 2 und den Balgrahmen 13b getrieben worden und die Unterlegscheiben 15a und 15b unter den Nietköpfen platziert. Durch das Aufbohren sind in der dargestellten Schnittebene die Endabschnitte der Flächenkörper 11b abgetrennt und aus der Kavität des Balgrahmens 13b entfernt worden. Alternativ kann die Verbindung mittels einer Schraubverbindung erfolgen, zum Beispiel mittels einer selbstschneidenden Schraube, die von außen in den Balgrahmen 13b eingetrieben wird.Zusätzlich ist eine Verbindung der Flächenkörper 11 des Balgmantels 12 mit den darunter liegenden, teilweise verschlissenen Flächenkörpern 11b dargestellt. Diese Verbindung ist mittels der Nähte 3b ausgeführt, welche im Wesentlichen entlang der gesamten Länge der Flächenkörper 11 zwischen benachbarten Verbindungsanordnungen 100 des Balgmantels 12 verlaufen. Zur weiteren Abdichtung des Zwischenraumes zwischen Balgmantel 12 und Balg 1b,insbesondere gegen eindringende Feuchtigkeit, kann im Bereich um den Balgrahmen 13b vorteilhaft noch ein Dichtmittel eingebracht werden, beispielsweise ein elastisches Silikon.

In der in Fig. 6 dargestellten Schnittebene ist ein U-förmiges Klemmprofil 16 enthalten, welches über das Verbindungsband 2 sowie randseitig über die Flächenkörper 11 des Balgmantels 12 gestülpt ist. Zur Befestigung des Klemmprofils 16 kann allein die Klemmwirkung ausreichen oder es kann ein Verbindungsmittel, zum Beispiel ein Niet 14b mit Unterlegscheiben 15c, durch das Klemmprofil 16 und den darin angeordneten Balgrahmen 13b getrieben werden. Das Klemmprofil 16 ist in Umfangsrichtung des Balges 1b zumindest abschnittsweise, bevorzugt jedoch im Randbereich des Balgmantels 12, angeordnet.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile können sowohl für sich als auch in den verschiedensten Kombinationen erfindungswesentlich sein.

### Bezugszeichenliste:

- 100: Verbindungsanordnung
- 1, 1b: Balg
- 10: Reparaturset
- 11, 11b: Falten- oder Wellenflächenkörper
- 12: Balgmantel
- 13, 13b: Balgrahmen
- 14, 14b: Niet
- 15a, 15b, 15c: Unterlegscheibe
- 16: Klemmprofil
- 2: Verbindungsband
- 3, 3b: Naht
- 4: Einfassband
- 5: Reibungsschutzband

## Patentansprüche

1. Verbindungsanordnung (100) zur Verbindung von Falten- oder Wellenflächenkörpern (11) eines Balges (1) einer Übergangseinrichtung zwischen zwei beweglich miteinander verbundenen Fahrzeugen oder einer Fluggastbrücke oder einer Fluggasttreppe,
**dadurch gekennzeichnet,**
**dass** die Verbindungsanordnung (100) ein streifenförmiges, flexibles Verbindungsband (2) umfasst, wobei die Falten- oder Wellenflächenkörper (11) randseitig mit dem Verbindungsband (2) verbunden sind.

2. Verbindungsanordnung (100) nach Anspruch 1,
**dadurch gekennzeichnet,**
**dass** die Falten- oder Wellenflächenkörper (11) randseitig mit dem Verbindungsband (2) mittels Nähten (3) vernäht sind.

3. Verbindungsanordnung (100) nach Anspruch 1 oder 2,
**dadurch gekennzeichnet,**
**dass** das Verbindungsband (2) aus einem nichtmetallischen, biegsamen Werkstoff ausgebildet ist.

4. Verbindungsanordnung (100) nach einem der vorgenannten Ansprüche,
**dadurch gekennzeichnet,**
**dass** das Verbindungsband (2) aus einem beschichteten Textil ausgebildet ist.

5. Verbindungsanordnung (100) nach einem der vorgenannten Ansprüche,
**dadurch gekennzeichnet,**
**dass** das Verbindungsband (2) eine höhere Dicke und/oder einen höheren Elastizitätsmodul und/oder eine höhere Biegefestigkeit aufweist als die Falten-oder Wellenflächenkörper (11).

6. Verbindungsanordnung (100) nach einem der vorgenannten Ansprüche,
**dadurch gekennzeichnet,**
**dass** die Verbindungsanordnung (100) zwei Einfassbänder (4) umfasst, wobei die Einfassbänder (4) jeweils randseitig um einen Falten- oder Wellenflächenkörper (11) und das Verbindungsband (2) umgeschlagen und mit dem Falten- oder Wellenflächenkörper (11) und dem Verbindungsband (2) mittels einer Naht (3) vernäht sind.

7. Verbindungsanordnung (100) nach einem der Ansprüche 1 bis 5,
**dadurch gekennzeichnet,**
**dass** die Verbindungsanordnung (100) zwei Reibungsschutzbänder (5) umfasst, wobei die Reibungsschutzbänder (5) jeweils randseitig um einen Falten- oder Wellenflächenkörper (11) und das Verbindungsband (2) umgeschlagen und mit dem Falten- oder Wellenflächenkörper (11) und dem Verbindungsband (2) mittels einer Naht (3) vernäht sind.

8. Verbindungsanordnung (100) nach Anspruch 6,
**dadurch gekennzeichnet,**
**dass** die Verbindungsanordnung (100) zwei Reibungsschutzbänder (5) umfasst, wobei die Reibungsschutzbänder (5) jeweils um ein Einfassband (4) umgeschlagen und mit dem Einfassband (4) und dem Falten- oder Wellenflächenkörper (11) und dem Verbindungsband (2) mittels einer Naht (3) vernäht sind.

9. Balg (1) einer Übergangseinrichtung zwischen zwei beweglich miteinander verbundenen Fahrzeugen oder einer Fluggastbrücke oder einer Fluggasttreppe, wobei der Balg (1) eine Mehrzahl von miteinander verbundenen Falten- oder Wellenflächenkörper (11) umfasst,
**dadurch gekennzeichnet,**
**dass** die Verbindung der Falten- oder Wellenflächenkörper (11) wenigstens abschnittsweise mittels einer Verbindungsanordnung (100) nach einem der Ansprüche 1 bis 8 ausgebildet ist.

10. Reparaturset (10) für einen wenigstens abschnittsweise beschädigten oder abgenutzten Balg (1b) einer Übergangseinrichtung zwischen zwei beweglich miteinander verbundenen Fahrzeugen oder einer Fluggastbrücke oder einer Fluggasttreppe,
**dadurch gekennzeichnet,**
**dass** das Reparaturset (10) einen Balgmantel (12) umfasst, wobei der Balgmantel (12) eine Mehrzahl von miteinander verbundenen Falten-oder Wellenflächenkörpern (11) umfasst und die Verbindung der Falten- oder Wellenflächenkörper (11) mittels einer Verbindungsanordnung (100) nach einem der Ansprüche 1 bis 8 ausgebildet ist, und wobei der Balgmantel (12) den beschädigten oder abgenutzten Abschnitt des Balges (1b) umhüllt und mit dem Balg (1b) verbunden ist.

11. Reparaturset (10) nach Anspruch 10,
**dadurch gekennzeichnet,**
**dass** der Balgmantel (12) mit dem Balg (1b) mittels Nähten (3b) vernäht und/oder mit dem Balg (1b) verklebt und/oder mit dem Balg (1b) mittels einer Niet- oder Schraubverbindung verbunden ist.

12. Reparaturset (10) nach Anspruch 11,
**dadurch gekennzeichnet,**
**dass** das Verbindungsband (2) des Balgmantels (12) mit dem Balgrahmen (13b) des Balges (1b) verbunden ist, bevorzugt mittels Nieten (14) vernietet oder mittels Schrauben verschraubt.

13. Reparaturset (10) nach Anspruch 10,
**dadurch gekennzeichnet,**
**dass** der Balgmantel (12) mit dem Balg (1b) mittels eines U-förmigen Klemmprofils (16) verbunden ist, wobei das Klemmprofil (16) den Balgmantel (12) und den darunter angeordneten Balgrahmen (13b) umschließt und klemmend oder mittels eines Verbindungsmittels an dem Balgmantel (12) und an dem Balgrahmen (13b) befestigt ist.
